# EUROPÄISCHE PATENTSCHRIFT

(11) **EP 3 423 165 B1**
(45) Veröffentlichungstag und Bekanntmachung des Hinweises auf die Patenterteilung: **05.02.2020**
(21) Anmeldenummer: 17707502.5
(22) Anmeldetag: 21.02.2017
(51) Int. Cl.: B01D 19/04, C11D 3/00, C11D 3/37, C11D 3/16, C11D 3/12, C08L 83/04

(54) **ENTSCHÄUMERZUSAMMENSETZUNGEN FÜR WASCHMITTEL**
DEFOAMER COMPOSITIONS FOR DETERGENTS
COMPOSITIONS D'AGENT ANTIMOUSSE POUR DÉTERGENTS

(30) Priorität: 01.03.2016 DE 102016203344
(43) Veröffentlichungstag der Anmeldung: 09.01.2019
(73) Patentinhaber: Wacker Chemie AG, 81737 München (DE)
(72) Erfinder: RAUTSCHEK, Holger, 01612 Nünchritz (DE); BECKER, Richard, Ann Arbor Michigan 48103 (US); BREHM, Christof, 84489 Burghausen (DE)
(74) Vertreter: Deffner-Lehner, Maria
(86) Internationale Anmeldenummer: PCT/EP2017/053946
(87) Internationale Veröffentlichungsnummer: WO 2017/148750

(56) Entgegenhaltungen:
- EP-A1- 0 663 225
- EP-A1- 1 167 456
- EP-A1- 2 781 247
- EP-A2- 2 253 364
- WO-A1-2006/018145
- WO-A1-2012/134651
- WO-A1-2014/066308
- WO-A1-2014/066309
- WO-A1-2015/022165
- US-A- 5 648 327
- US-A1- 2011 209 291

## Beschreibung

Die Erfindung betrifft Entschäumerzusammensetzungen, enthaltend spezielle Polysiloxane und Polyether, sowie deren Anwendung zum Entschäumen von wässrigen Medien, insbesondere wässrigen Tensidformulierungen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensivem Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt. Entschäumer auf Basis von Siloxanen werden beispielsweise nach DE-AS 15 19 987 durch Erhitzen von hydrophiler Kieselsäure in Polydimethylsiloxanen hergestellt.

Entschäumer auf der Basis von Polydimethylsiloxanen haben den Nachteil, dass Polydimethylsiloxane mit den meisten Tensidsystemen z.B. Netzmitteln oder Flüssigwaschmitteln schlecht verträglich sind und zur Abscheidung neigen, was sehr unerwünscht ist. Deshalb hat es viele Bemühungen gegeben Entschäumer zu finden, die in Flüssigwaschmitteln gut verträglich und auch nach Lagerung gut wirksam sind. Die Verwendung selbstemulgierender Entschäumer (US 4,075,118 A) führt zu einer guten Verträglichkeit aber einer begrenzten Wirksamkeit. Deshalb hat man versucht, insbesondere dem Wirkungsverlust der Entschäumer bei der Lagerung im Flüssigwaschmittel auf der Basis von verzweigten hochviskosen Siloxanen entgegenzuwirken (EP 499364 B1, EP 635564 A1). Die Verwendung von Polyethersiloxanen (US 4,983,316 A), die Verwendung von nichtwässrigen Emulsionen (EP 638346 B1) und die Verwendung von Lösungsmitteln in Kombination mit Al- oder Mg-Seifen (US 6,004,918 A) ist ebenfalls versucht worden. Verwendung von Alkylarylölen in Kombination mit verzweigten Polyethersiloxanen und polyethermodifizierten MQ-Harzen (US 8,536,109 B2) wurde ebenfalls vorgeschlagen. US 2011/0209291 beschreibt Flüssigwaschmittel enthaltend a)ein Tensidsystem b)ein Antischaummittel aus Siliconpolymeren mit Aryl- oder Alkylaryl-Resten und Siliconharz und Füllstoffe und c)ein Strukturmittel.

Diesen technischen Lösungen ist gemeinsam, dass die Balance zwischen Kosten, Verträglichkeit, Wirksamkeit und Langzeitstabilität nicht zufriedenstellend ist.

Es ist folglich die Aufgabe der vorliegenden Erfindung Entschäumerformulierungen bereitzustellen, die einfach und kostengünstig herstellbar sind, eine gute Verträglichkeit mit Flüssigwaschmitteln und eine gute Wirksamkeit auch nach Lagerung aufweisen.

Diese Aufgabe wird gelöst, indem Entschäumerzusammensetzungen formuliert werden, die ein Entschäumercompound enthaltend flüssige Polyorganosiloxane mit direkt an Silizium gebundenen aromatischen Resten, Siliconharze und/oder Füllstoffe, und definierte Polyether sowie ggf. Polyethersiloxane enthalten.

Gegenstand der Erfindung sind Entschäumerzusammensetzungen enthaltend
(A) ein Entschäumercompound enthaltend
   (a1) mindestens eine Organosiliziumverbindung, welche Einheiten der Formel

      Rₐ(R¹O)_{b}R²_{c}SiO_{(4-a-b-c)/2} (I)

      aufweist, worin
      R gleich oder verschieden sein kann und ein Wasserstoffatom oder einen einwertigen, SiC-gebundenen, gegebenenfalls substituierten, aliphatischen oder über aliphatische Gruppen an das Siliziumatom gebundenen aromatischen Kohlenwasserstoffrest bedeutet,
      R¹ gleich oder verschieden sein kann und ein Wasserstoffatom oder einen einwertigen, gegebenenfalls substituierten Kohlenwasserstoffrest bedeutet,
      R² gleich oder verschieden sein kann und einen einwertigen, gegebenenfalls substituierten, aromatischen Kohlenwasserstoffrest, der über ein Ringkohlenstoffatom an das Siliziumatom angebunden ist, bedeutet,
      a 0, 1, 2 oder 3 ist,
      b 0, 1, 2 oder 3 ist und
      c 0, 1, 2 oder 3 ist,
      mit der Maßgabe, dass die Summe a+b+c kleiner oder gleich 3 ist und in 1-100 %, bevorzugt in 10-60 %, besonders bevorzugt in 20-40 %, aller Einheiten der Formel (I) c verschieden 0 ist und in mindestens 50 % aller Einheiten der Formel (I) in der Organosiliziumverbindung die Summe a+b+c gleich 2 ist,
   (a2) mindestens einen Zusatzstoff ausgewählt aus
      (a21) Füllstoffpartikeln, vorzugsweise Siliciumdioxid, Kieselsäuren, Titandioxid oder Aluminiumoxid, und/oder
      (a22) Organopolysiloxanharz bestehend aus Einheiten der Formel

         R³_{d}(R⁴O)ₑSiO_{(4-d-e)/2} (II),

         worin
         R³ gleich oder verschieden sein kann und ein Wasserstoffatom oder einen einwertigen, gegebenenfalls substituierten, SiC-gebundenen Kohlenwasserstoffrest bedeutet,
         R⁴ gleich oder verschieden sein kann und ein Wasserstoffatom oder einen einwertigen, gegebenenfalls substituierten Kohlenwasserstoffrest bedeutet,
         d 0, 1, 2 oder 3 ist und
         e 0, 1, 2 oder 3 ist,
         mit der Maßgabe, dass die Summe d+e kleiner oder gleich 3 ist und in weniger als 50 % aller Einheiten der Formel (II) im Organopolysiloxanharz die Summe d+e gleich 2 ist,
      und gegebenenfalls
   (a3) eine Organosiliziumverbindung, welche Einheiten der Formel

      R⁵_{g}(R⁶O)ₕSiO_{(4-g-h)/2} (III),

      aufweist, worin
      R⁵ gleich oder verschieden sein kann und eine für R angegebene Bedeutung hat,
      R⁶ gleich oder verschieden sein kann und eine für R¹ angegebene Bedeutung hat,
      g 0, 1, 2 oder 3 ist und
      h 0, 1, 2 oder 3 ist,
      mit der Maßgabe, dass die Summe g+h kleiner oder gleich 3 ist und in mindestens 50 % aller Einheiten der Formel (III) in der Organosiliziumverbindung die Summe g+h gleich 2 ist,
(B) Polyoxyalkylene ausgewählt aus der Gruppe der Polypropylenglycole, endständig veretherte oder veresterte Polypropylenglycole, Polypropylenglycol/Polyethylenglycol-Copolymere, endständig veretherte oder veresterte Polypropylenglycol/Polyethylenglycol-Copolymere, und deren Mischungen,
   gegebenenfalls
(C) polyethermodifizierte Siloxane,
   gegebenenfalls
(D) organische Verbindungen,
   und gegebenenfalls
(F) weitere Additive.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste, über aliphatische Gruppen an das Siliziumatom gebundene aromatische Gruppen, wie der Benzylrest, Phenylethylrest oder der 2-Phenylpropylrest.

Beispiele für substituierte Reste R sind 3,3,3-Trifluor-n-propylrest, Cyanoethyl-, Glycidoxy-n-propyl-, Polyalkylenglycol-n-propyl-, Amino-n-propyl-, Aminoethylamino-n-propyl- und Methacryloxy-n-propylreste.

Vorzugsweise handelt es sich beim Rest R um ein Wasserstoffatom oder um einen einwertigen, gegebenenfalls substituierten, aliphatischen Kohlenwasserstoffrest mit 1 bis 30 Kohlenstoffatomen, bevorzugt um einen einwertigen aliphatischen Kohlenwasserstoffrest mit 1 bis 4 Kohlenstoffatomen, insbesondere um den Methylrest.

Beispiele für Rest R¹ sind das Wasserstoffatom und die für Rest R und R² angegebenen Reste.

Vorzugsweise handelt es sich beim Rest R¹ um ein Wasserstoffatom oder um einen einwertigen, gegebenenfalls substituierten Kohlenwasserstoffrest mit 1 bis 30 Kohlenstoffatomen, bevorzugt um ein Wasserstoffatom oder um einen einwertigen Kohlenwasserstoffrest mit 1 bis 4 Kohlenstoffatomen, insbesondere um den Methyl- oder Ethylrest.

Beispiele für R² sind Arylreste, wie Phenyl-, Toloyl-, Xylyl-, Cumyl-, Naphtyl- und Anthracylreste.

Bevorzugt handelt es sich bei Rest R² um den Phenylrest.

Bevorzugt handelt es sich bei 10 bis 100 Mol-%, besonders bevorzugt 15 bis 50 Mol-%, der SiC-gebundenen Reste in der Komponente (a1) um Reste R².

Beispiele für Rest R³ sind das Wasserstoffatom und die für Rest R und R² angegebenen Reste.

Vorzugsweise handelt es sich beim Rest R³ um einen einwertigen, gegebenenfalls substituierten Kohlenwasserstoffrest mit 1 bis 30 Kohlenstoffatomen, bevorzugt um einen einwertigen Kohlenwasserstoffrest mit 1 bis 6 Kohlenstoffatomen, insbesondere um den Methylrest.

Beispiele für Rest R⁴ sind die für den Rest R¹ angegebenen Reste.

Vorzugsweise handelt es sich beim Rest R⁴ um ein Wasserstoffatom oder um einen einwertigen Kohlenwasserstoffrest mit 1 bis 4 Kohlenstoffatomen, insbesondere um ein Wasserstoffatom oder um den Methyl- oder Ethylrest.

Bevorzugt ist der Wert für d gleich 3 oder 0.

Beispiele für Reste R⁵ sind die für Rest R angegebenen Beispiele.

Vorzugsweise handelt es sich beim Rest R⁵ um ein Wasserstoffatom oder um einen einwertigen, gegebenenfalls substituierten, aliphatischen Kohlenwasserstoffrest mit 1 bis 30 Kohlenstoffatomen, bevorzugt um einen einwertigen aliphatischen Kohlenwasserstoffrest mit 1 bis 4 Kohlenstoffatomen, insbesondere um den Methylrest.

Beispiele für Rest R⁶ sind das Wasserstoffatom und die für Rest R und R² angegebenen Reste.

Vorzugsweise handelt es sich beim Rest R⁶ um ein Wasserstoffatom oder um einen einwertigen, gegebenenfalls substituierten Kohlenwasserstoffrest mit 1 bis 30 Kohlenstoffatomen, bevorzugt um ein Wasserstoffatom oder einen einwertigen Kohlenwasserstoffreste mit 1 bis 4 Kohlenstoffatomen, insbesondere um den Methyl- oder Ethylrest.

Für die vorliegende Erfindung ist es wesentlich, dass die Komponente (A) ein Polyorganosiloxan (a1) enthält, das aromatische Reste enthält, die direkt an das Siliziumatom gebunden sind. Das heißt, dass es eine kovalente Bindung zwischen einem Siliziumatom in der Einheit der Formel (I) und einem Kohlenstoffatom, welches zum aromatischen Ring gehört, gibt. Komponente (A) ist in DE 102004040263 A1 beschrieben.

Vorzugsweise sind die Organosiliziumverbindungen (a1) Organopolysiloxane bestehend aus Einheiten der Formel (I).

Beispiele für die Komponente (a1) sind solche, die eine oder mehrere Einheiten der Formeln
Ph₃SiO_{1/2}-, Ph₂MeSiO_{1/2}-, PhMe₂SiO_{1/2}-, Ph₂SiO_{2/2}-, PhMeSiO_{2/2}- und PhSiO_{3/2}- enthalten,
wobei Me gleich Methylrest und Ph gleich Phenylrest bedeutet, wie z.B. lineare Polysiloxane der Formeln

Me₃SiO(Ph₂SiO)ₓ(Me₂SiO)_{z}SiMe₃,

Me₃SiO(PhMeSiO)_{y}(Me₂SiO)_{z}SiMe₃,

Me₃SiO(Ph₂SiO)ₓ(PhMeSiO)_{y}(Me₂SiO)_{z}SiMe₃

und

Me₃SiO(Ph₂SiO)ₓ(Me₂SiO)_{z}SiMe₃

sowie
verzweigte Polysiloxane der Formeln

MeSi[O(Ph₂SiO)ₓ(Me₂SiO)_{z}SiMe₃]₃,

PhSi[O(PhMeSiO)_{y}(Me₂SiO)_{z}SiMe₃]₃

und

Me₃SiO(Me₂SiO)_{z}[PhSiO(OMe₂SiO)_{z}SiMe₃]ᵥ(Me₂SiO)_{z}SiMe₃,

wobei die Koeffizienten v, x, y unabhängig voneinander Werte größer gleich 1 annehmen und z 0 oder größer gleich 1 ist. Die Summe aus v, x, y und z bestimmt den Polymerisationsgrad, v die Anzahl von Verzweigungen, und damit die Viskosität.

Die Organosiliziumverbindungen (a1) haben eine Viskosität von bevorzugt 10 bis 1 000 000 mPas, besonders bevorzugt von 100 bis 50 000 mPas, insbesondere von 500 bis 5 000 mPas, jeweils gemessen bei 25°C und einem Schergefälle von 1/s.

Die Organosiliziumverbindungen (a1) sind handelsübliche Produkte bzw. können nach beliebigen, in der siliziumorganischen Chemie bisher bekannten Methoden hergestellt werden, wie z.B. durch Cohydrolyse der entsprechenden Silane.

Bei der Komponente (a21) handelt es sich bevorzugt um pulverförmige, vorzugsweise hydrophobe, Füllstoffe.

Vorzugsweise weist Komponente (a21) eine BET-Oberfläche von 20 bis 1000 m²/g, eine Partikelgröße von weniger als 10 µm und eine Agglomeratgröße von weniger als 100 µm auf.

Beispiele für die Komponente (a21) sind Siliciumdioxid (Kieselsäuren), Titandioxid, Aluminiumoxid, Metallseifen, Quarzmehl, PTFE-Pulver, Fettsäureamide z. B. Ethylenbisstearamid, und fein verteilte hydrophobe Polyurethane.

Vorzugsweise werden als Komponente (a21) Siliciumdioxid (Kieselsäuren), Titandioxid oder Aluminiumoxid, insbesondere mit einer BET-Oberfläche von 20 bis 1000 m²/g, einer Partikelgröße von weniger als 10 µm und einer Agglomeratgröße von weniger als 100 µm eingesetzt.

Besonders bevorzugt als Komponente (a21) sind Kieselsäuren, besonders bevorzugt solche mit einer BET-Oberfläche von 50 bis 800 m²/g, insbesondere solche mit einer BET-Oberfläche von 80 bis 500 m²/g. Diese Kieselsäuren können pyrogene oder gefällte Kieselsäuren sein. Es sind als Komponente (a21) sowohl vorbehandelte Kieselsäuren einsetzbar, also handelsübliche hydrophobe Kieselsäuren, als auch hydrophile Kieselsäuren. Der Grad der Hydrophobierung wird durch die Methanolzahl charakterisiert. Diese wird entsprechend DE 2107082 A1 ermittelt, indem 0,2 g der Kieselsäure in 50 ml Wasser gegeben werden. Unter Rühren wird solange Methanol zugegeben, bis die Kieselsäure komplett benetzt und in der Flüssigkeit suspendiert ist. Die Methanolzahl ist der Prozentsatz an Methanol in dem Flüssigkeitsgemisch, das die Kieselsäure gerade benetzt. Als vorbehandelte hydrophobe Kieselsäuren werden vorzugsweise Kieselsäuren mit einer Methanolzahl von mehr als 30, insbesondere von mehr als 50, eingesetzt. Beispiele für handelsübliche hydrophobe Kieselsäuren, die erfindungsgemäß eingesetzt werden können, sind HDK® H2000, eine pyrogene mit Hexamethyldisilazanen behandelte Kieselsäure mit einer BET-Oberfläche von 140 m²/g (käuflich erhältlich bei der Wacker-Chemie AG, München, Deutschland) und eine gefällte mit Polydimethylsiloxan behandelte Kieselsäure mit einer BET-Oberfläche von 90 m²/g (käuflich erhältlich unter der Bezeichnung "SIPERNAT® D10" bei der Evonik Resource Efficiency GmbH, Hanau, Deutschland).

Falls als Komponente (a21) hydrophobe Kieselsäuren eingesetzt werden sollen, können hydrophile Kieselsäuren auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z. B. durch mehrstündiges Erhitzen der in der Komponente (a1) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden. Diese Behandlung ist auch beim Einsatz von handelsüblichen hydrophoben Kieselsäuren möglich und kann zur Wirksamkeitsverbesserung beitragen.

Eine weitere Möglichkeit ist die Verwendung einer Kombination von in situ hydrophobierten Kieselsäuren mit handelsüblichen hydrophoben Kieselsäuren. Dabei werden vorzugsweise je 1 Teil in situ hydrophobierte Kieselsäure 0,2 bis 5 Teile vorbehandelte hydrophobierte Kieselsäure eingesetzt.

Füllstoffe (a22) werden in den erfindungsgemäßen Entschäumerformulierungen vorzugsweise in Mengen von mindestens 1 Gew.-% und höchstens 20 Gew.-%, bevorzugt höchstens 10 Gew.-%, jeweils bezogen auf das Gesamtgewicht des Entschäumercompounds (A), eingesetzt.

Besonders bevorzugt handelt es sich bei Komponente (a22) um Organopolysiloxanharze, die im Wesentlichen aus R³₃SiO_{1/2} (M)- und SiO_{4/2} (Q) -Einheiten bestehen, wobei R³ die oben dafür angegebene Bedeutung hat. Diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% Si-gebundene Hydroxy- oder Alkoxygruppen enthalten. R³ ist dabei vorzugsweise ein Methylrest.

Vorzugsweise haben die Organopolysiloxanharze (a22) bei 25°C eine Viskosität größer 1000 mPas oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Bevorzugt sind die erfindungsgemäß eingesetzten Organopolysiloxanharze (a22) in Benzol bei einer Temperatur von 25°C und einem Druck von 101,325 kPa zu mindestens 100g/l löslich.

Siloxanharze (a22) werden in den erfindungsgemäßen Entschäumerformulierungen vorzugsweise in Mengen von mindestens 1 Gew.-% und höchstens 20 Gew.-%, bevorzugt höchstens 10 Gew.-%, jeweils bezogen auf das Gesamtgewicht des Entschäumercompounds (A), eingesetzt.

Vorzugsweise sind die gegebenenfalls eingesetzten Organosiliziumverbindungen (a3) Organopolysiloxane bestehend aus Einheiten der Formel (III).

Die gegebenenfalls eingesetzten Organopolysiloxane (a3) haben eine Viskosität von bevorzugt 10 bis 1 000 000 mm²/s bei 25°C.

Beispiele für erfindungsgemäß gegebenenfalls eingesetzte Organopolysiloxane (a3) sind solche, die verschieden von Organopolysiloxane (a1) sind und keine direkt an Silizium gebundenen aromatischen Reste enthalten, wie etwa Polydimethylsiloxane mit Viskositäten von 100 bis 1 000 000 mPa·s bei 25°C. Diese Polydimethylsiloxane können z.B. durch den Einbau von R⁵SiO_{3/2}- oder SiO_{4/2}-Einheiten bis maximal 5% aller Einheiten verzweigt sein, wobei R⁵ die oben dafür angegebene Bedeutung hat. Diese verzweigten oder anvernetzten Siloxane weisen dann viskoelastische Eigenschaften auf.

Bevorzugt handelt es sich bei der gegebenenfalls eingesetzten Komponente (a3) um im Wesentlichen lineare Organopolysiloxane enthaltend Einheiten der Formel (III), besonders bevorzugt um Polydimethylsiloxane, die mit Silanolgruppen und/oder mit Alkoxygruppen und/oder mit Trimethylsiloxygruppen terminiert sein können.

Als Komponente (a3) können auch Organosiliziumverbindungen enthaltend Bausteine der allgemeinen Formel (III), worin R⁵ einen Methylrest und R⁶ einen linearen und/oder verzweigten Kohlenwasserstoffrest mit mindestens 6 Kohlenstoffatomen bedeuten, h einen durchschnittlichen Wert von 0,005 bis 0,5 annimmt und die Summe (g+h) einen durchschnittlichen Wert von 1,9 bis 2,1 hat, eingesetzt werden. Derartige Produkte sind beispielsweise durch alkalisch katalysierte Kondensation von silanolterminierten Polydimethylsiloxanen einer Viskosität 50 bis 50 000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

Falls die erfindungsgemäßen Zusammensetzungen Komponente (a3) enthalten, handelt es sich um Mengen von bevorzugt 1 bis 90 Gew.-%, besonders bevorzugt 2 bis 50 Gew.-%, insbesondere 2 bis 10 Gew.-%, jeweils bezogen auf das Gesamtgewicht des Entschäumercompounds (A).

Die erfindungsgemäßen Entschäumerformulierungen enthalten bevorzugt 10-90 Gew.-%, besonders bevorzugt 20-80 Gew.-% insbesondere 30-70 Gew.-%, an Komponenten (A).

Komponenten (B) sind vorzugsweise Polyoxyalkylene der Formel

R⁷-[O-CH₂-CH(CH₃)]ₓ-[O-CH₂-CH₂]_{y}-O-R⁷ (IV),

worin R⁷ gleich oder verschieden sein kann und ein Wasserstoffatom, einen C₁-C₃₀-Alkylrest, einen C₁-C₃₀-Alkenylrest oder ein Rest der Formel

R⁸-C(O)- (V)

bedeutet,
worin R⁸ einen C₁-C₂₂-Alkylrest bedeutet,
x einen Wert von 6 bis 300 und
y einen Wert von 0 bis 30 hat
und das Verhältnis y/x 0 bis 1 ist.

Beispiele für Reste R⁷ sind das Wasserstoffatom und der Methyl-, Allyl- und Butylrest. Vorzugsweise ist der Rest R⁷ ein Wasserstoffatom.

Beispiele für Reste der Formel R⁸ sind der Methyl- und Butylrest.

In der Formel (IV) ist der Index x vorzugsweise 15 bis 150, bevorzugt 25 bis 100. Das Verhältnis y/x ist vorzugsweise 0 bis 0,75, bevorzugt 0 bis 0,25, insbesondere 0 bis 0,1. In einer besonders bevorzugten Variante ist y = 0.

Vorzugsweise haben die Polyoxyalkylene der Formel (IV) eine mittlere molare Masse (Zahlenmittel Mn) von 100 bis 20 000, bevorzugt 200 bis 12 000.

Bevorzugt werden als Polyoxyalkylene Polypropylenglycole mit einer mittleren molaren Masse (Zahlenmittel Mn) von 100 bis 8000 g/mol eingesetzt.

Es kann eine Art von Polyoxyalkylenen (B) oder mehrere Arten von Polyoxyalkylenen (B) eingesetzt werden.

Die Oxyalkylengruppen können in den Polyoxyalkylenen der Formel (I) statistisch verteilt sein oder als Blockcopolymere vorliegen.

Polyoxyalkylene der Formel (IV) sind bekannte handelsübliche Produkte. Je nach Werten für x und y sind die Polyoxyalkylene Flüssigkeiten oder wachsartige Produkte, wobei flüssige Produkte mit einer Viskosität (bei 25°C und 1013 hPa) von 100 bis 1500 mm²/s bevorzugt sind.

Die Löslichkeit der Polyoxyalkylene in Wasser wird durch das Verhältnis von y/x bestimmt. Bevorzugt werden Polyoxyalkylene eingesetzt, die bei 25°C und 1013 hPa zu weniger als 2 Gew.-% in Wasser löslich sind, bzw. einen Trübungspunkt (gemessen nach EN 1890 Variante A) von kleiner als 35°C, insbesondere kleiner als 25°C aufweisen.

Die erfindungsgemäßen Entschäumerformulierungen enthalten bevorzugt 10-90 Gew.-%, besonders bevorzugt 20-80 Gew.-%, insbesondere 30-70 Gew.-%, an Komponenten (B).

Als Komponente (B) verwendete Substanzen sind handelsübliche Produkte.

Als gegebenenfalls mitverwendete polyethermodifizierte Siloxane (C) werden vorzugsweise Polyether-Polysiloxan-Copolymere eingesetzt, wobei es lineare oder verzweigte Polymere sein können.

Derartige Polyether-Polysiloxan-Copolymere sind Stand der Technik und dem Fachmann bekannt.

Beispiele für lineare Polyether-Polysiloxan-Copolymere sind solche, bei denen die Polyetherreste seitenständig an lineare Siloxanketten über Kohlenwasserstoffreste, vorzugsweise zweiwertige Kohlenwasserstoffreste, SiC-gebunden sind. Solche lineare Polyether-Polysiloxan-Copolymere sind z. B. in GB 2 350 117 A beschrieben.

Beispiele für verzweigte Polyether-Polysiloxan-Copolymere sind solche, bei denen die Polyetherreste seitenständig an lineare Siloxanketten über Kohlenwasserstoffreste, vorzugsweise zweiwertige Kohlenwasserstoffreste, SiC-gebunden sind und wobei diese linearen Siloxanketten über seitenständige organische Brücken miteinander verbunden.
Beispiele für diese organischen Brücken sind SiC-gebundene lineare oder verzweigte organische Reste, vorzugsweise zweiwertige Kohlenwasserstoffreste, die ein oder mehrere Heteroatome ausgewählt aus der Gruppe der Sauerstoff- und Stickstoffatome enthalten können, wie Alkylenreste, SiC-gebundene Polyetherreste, die über Alkylenreste, an die Siloxanketten gebunden sind, und SiC-gebundene zweiwertige Kohlenwasserstoffreste, wie Alkylenreste, die Polyether- und Urethangruppen enthalten.

Besonders gut geeignet sind verzweigte Polyether-Polysiloxan-Copolymere, wie sie z. B. in EP 1 076 073 A1, EP 1 424 117 A2 oder WO 2006/128624 A1 als Komponente von Entschäumern beschrieben sind.

Bevorzugt werden als verzweigte Polyether-Polysiloxan-Copolymere solche eingesetzt, bei denen die Siloxanketten über seitenständige zweiwertige SiC-gebundene Kohlenwasserstoffreste, die Polyetherreste und Urethangruppen enthalten, miteinander verbunden sind.

Diese Polyether-Polysiloxan-Copolymere und deren Herstellung sind in WO 2006/128624 A1, insbesondere auf Seite 3, Zeile 8 bis Seite 13, Zeile 38, beschrieben.

Die Polyether-Polysiloxan-Copolymere (C) können in den erfindungsgemäßen Entschäumerzusammensetzungen vorzugsweise in Mengen von 0 bis 60 Gew.-%, bevorzugt 0 bis 40 Gew.-%, besonders bevorzugt 1 bis 30 Gew.-%, insbesondere 1 bis 10 Gew.-%, jeweils bezogen auf das Gesamtgewicht der Entschäumerzusammensetzung, eingesetzt werden.

Außer den Komponenten (A), (B) und gegebenenfalls (C) können die erfindungsgemäßen Zusammensetzungen alle weiteren Stoffe enthalten, wie sie auch bisher in Entschäumerformulierungen verwendet worden sind, wie z.B. organische Verbindungen (D).

Bei der gegebenenfalls eingesetzten Komponente (D) handelt es sich besonders bevorzugt um organische Verbindungen mit einem Siedepunkt größer als 100°C, bei dem Druck der umgebenden Atmosphäre, also bei 900 bis 1100 hPa, insbesondere um Verbindungen, die nicht unzersetzt destilliert werden können, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie 2,2,4-Trimethyl-3,3-Pentandioldiisobutyrate, Fettsäureestern, wie z.B. Octylstearat und Dodecylpalmitat, Fettalkoholen, Ethern niedermolekularer Alkohole, Phthalaten, Glycole, wie 1,2-Propandiol, Glycolether, Estern der Phosphorsäure und Wachsen.
Die organischen Verbindungen (D) können in den erfindungsgemäßen Entschäumerzusammensetzungen vorzugsweise in Mengen von 0 bis 60 Gew.-%, bevorzugt 0 bis 20 Gew.-%, insbesondere 1 bis 20 Gew.-%, jeweils bezogen auf das Gesamtgewicht der Entschäumerzusammensetzung, eingesetzt werden. Die erfindungsgemäßen Entschäumerzusammensetzungen enthalten bevorzugt keine Komponente (D).

In den erfindungsgemäßen Entschäumerzusammensetzungen wird Wasser (E) vorzugsweise in Mengen von höchstens 5 Gew.-%, bevorzugt höchstens 1 Gew.-%, jeweils bezogen auf das Gesamtgewicht der Entschäumerzusammensetzung, mitverwendet. Die erfindungsgemäßen Entschäumerzusammensetzungen enthalten bevorzugt keinen Zusatz von Wasser, d.h. bevorzugt ist die Mitverwendung von Wasser in den erfindungsgemäßen Entschäumerzusammensetzungen ausgeschlossen.

Als Additive (F) könne alle bekannten Additive, ausgewählt aus organischen verdickend wirkenden Polymeren, Konservierungsmitteln, Farbstoffen und Duftstoffen, verwendet werden. Weiterhin können alkalische oder saure Katalysatoren mitverwendet werden. Beispiele für alkalische Katalysatoren sind Alkali- und Erdalkalihydroxide, wie NaOH, KOH, CsOH, LiOH und Ca(OH)₂. Beispiele für saure Katalysatoren sind Salzsäure, Schwefelsäure und Phosphornitridchloride.
Die Dosierung der Katalysatoren kann in typischen organischen Lösemitteln wie Alkoholen (wie z.B. Methanol, Ethanol, Isopropanol) oder Estern (wie z.B. Essigsäureethylester) erfolgen.

Die erfindungsgemäßen Entschäumerzusammensetzungen bestehen bevorzugt aus
(A) 10 bis 90 Gew.-% erfindungsgemäßem Entschäumercompound,
(B) 10 bis 90 Gew.-% erfindungsgemäßen Polyoxyalkylenen
(C) 0 bis 10 Gew.-%, vorzugsweise 1 bis 10 Gew.-%, polyethermodifizierte Siloxane
(D) 0 bis 20 Gew.-%, vorzugsweise 1 bis 20 Gew.-%, organischen Verbindungen
(E) 0 bis 1 Gew.-% Wasser, und
(F) 0 bis 10 Gew.-% weiteren Additiven,
jeweils bezogen auf das Gesamtgewicht der Entschäumerzusammensetzungen.

Die erfindungsgemäßen Zusammensetzungen sind bevorzugt viskose klare bis opake, sowie farblose bis bräunliche Flüssigkeiten.

Die erfindungsgemäßen Zusammensetzungen haben eine Viskosität von vorzugsweise 1 bis 20000 mPas, besonders bevorzugt von 5 bis 5000 mPas, insbesondere von 10 bis 2000 mPas, jeweils bei 25°C und einem Schergefälle von 1/s.

Bei den erfindungsgemäßen Zusammensetzungen kann es sich um Lösungen oder Dispersionen handeln.

Das Herstellen der erfindungsgemäßen Zusammensetzungen kann nach bekannten Verfahren, wie z.B. durch Mischen aller Komponenten erfolgen, wie z.B. durch einfaches Rühren mit statischen Mischern oder auch unter Anwendung von hohen Scherkräften in Kolloidmühlen, Dissolvern und Rotor-Stator-Homogenisatoren.

Ein weiterer Gegenstand der vorliegenden Erfindung sind Tensidformulierungen, vorzugsweise Netz-, Wasch- und Reinigungsmittel, bevorzugt bei 20°C flüssige Netz-, Wasch- und Reinigungsmittel, insbesondere Flüssigwaschmittel, enthaltend die erfindungsgemäßen Zusammensetzungen.

Ein weiterer Gegenstand der vorliegenden Erfindung ist ein Verfahren zum Entschäumen und/oder zur Schaumverhinderung von Medien, dadurch gekennzeichnet, dass die erfindungsgemäße Zusammensetzung mit dem Medium vermischt wird.

Der Zusatz der erfindungsgemäßen Zusammensetzung zu den schäumenden Medien kann direkt erfolgen, in geeigneten Lösungsmitteln, wie Toluol, Xylol, Methylethylketon oder tert.-Butanol, gelöst, oder als Pulver. Die zur Erzielung der gewünschten Entschäumerwirkung notwendige Menge richtet sich z.B. nach der Art des Mediums, der Temperatur und der auftretenden Turbulenz.

Vorzugsweise werden die erfindungsgemäßen Zusammensetzungen direkt mit konzentrierten flüssigen Tensidformulierungen, z.B. flüssigen Waschmitteln, vermischt.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, zum anwendungsfertigen schäumenden Medium zugegeben. In konzentrierten Tensidformulierungen, wie Flüssigwaschmitteln, können die erfindungsgemäßen Zusammensetzungen zu 0,1 bis 20 Gew.-% insbesondere zu 0,5 bis 5 Gew.-% enthalten sein.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerzusammensetzungen können überall dort eingesetzt werden, wo störender Schaum unterdrückt werden soll. Das ist z.B. in nichtwässrigen Medien, wie bei der Teerdestillation oder der Erdölverarbeitung der Fall. Die erfindungsgemäßen Entschäumerzusammensetzungen eignen sich besonders zur Bekämpfung von Schaum in wässrigen Medien, vorzugsweise in wässrigen Tensidformulierungen, wie die Anwendung in Wasch- und Reinigungsmitteln, die Bekämpfung von Schaum in Abwasseranlagen, bei Textilfärbeverfahren, bei der Erdgaswäsche, in Polymerdispersionen, und sind zum Entschäumen von bei der Zellstoffherstellung anfallenden wässrigen Medien einsetzbar.

Insbesondere eignen sich die erfindungsgemäßen Entschäumerzusammensetzungen als Bestandteil von Flüssigwaschmitteln, wo sie sich durch eine hervorragende Verträglichkeit und Wirksamkeit auszeichnen.

Die erfindungsgemäßen Zusammensetzungen haben den Vorteil, dass sie als Entschäumer leicht handhabbar sind, mit konzentrierten Tensidformulierungen mischbar sind, und dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

Die Bestimmung der Viskosität der einzelnen Komponenten sowie der Entschäumerzusammensetzungen erfolgt gemäß DIN 53019-1 (2008-09), DIN 53019-2 (2001-02) und DIN 53019 (2008-09) mit einem Kegel-Platte-Viskosimeter bei 25°C und einem Schergefälle von 1/s.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt. Die Viskosität wurde mit einem Kegel-Platte-Viskosimeter MCR 300 (Paar-Physika) bei 25°C und einem Schergefälle von 1/s bestimmt.

### Herstellung der Waschmittelformulierung zur Testung der Wirksamkeit und Verträglichkeit

168,40g eines alkoxylierten Fettalkohols (erhältlich unter dem Namen Lutensol® AO 8 bei der BASF SE) wurden bei 50°C geschmolzen. 30,88g Laurinsäure und 7,02g Kaliumhydroxid wurden hinzugefügt und kurz verrührt, anschließend wurden 462,52g vollentsalztes Wasser mit einer Temperatur von 50°C zugegeben und vermischt. Nachdem alles homogen gelöst war, wurden 190,85g eines Na-C₁₄₋₁₇-Alkylsulphonates (erhältlich unter dem Namen Hostapur SAS 60 bei der Clariant International Ltd.), 28,07g Natriumtetraborat und 56,13g Natriumcitrat eingerührt bis alles gelöst ist. Zum Schluss wurden noch 56,13g 1,2-Propandiol eingemischt.

### Prüfungen der Verträglichkeit

Zur Prüfung der Entschäumerwirksamkeit werden zu diesem Flüssigwaschmittel die in Tabelle 2 jeweils angegebenen Mengen der Entschäumerformulierungen gegeben. Die Verträglichkeit wurde nach 14 Tagen Lagerung bei 40°C visuell beurteilt.

### Prüfungen der Entschäumerwirksamkeit

100 g des Entschäumer enthaltenden Flüssigwaschmittels wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm (bei 30°C) gestartet und die Schaumhöhe in % bezogen auf das Trommelvolumen über einen Zeitraum von 55 Minuten aufgezeichnet. Die durchschnittliche Schaumhöhe wird als Schaumnote angegeben. Dabei bedeutet 0% absolut kein Schaum während der gesamten Testdauer und 100% bedeutet, dass die Trommel während der gesamten Testdauer völlig mit Schaum gefüllt ist.

### Die für die Formulierungen verwendeten Entschäumercompounds (A)

### Entschäumercompound A1 (nicht erfindungsgemäß)

Entschäumercompound A1 ist SILFOAM® SC 1132 kommerziell bei der Wacker Chemie AG München erhältlich; dieses Compound basiert auf Polydimethylsiloxan.

### Entschäumercompound A2 (nicht erfindungsgemäß, keine Komponente (a1) mit direkt am Si-Atom gebundenen aromatischen Resten)

### Entschäumercompound A2 wurde wie folgt hergestellt:

90 Teile eines mit trimethylsiloxygruppen terminierten Diorganopolysiloxans aus 20 mol% 2-Phenylpropenylmethysiloxan- und 80 mol% Dodecylmethylsiloxaneinheiten, das eine Viskosität von 1000 mPas aufwies (erhältlich unter dem Namen Trennmittel TN bei der Wacker Chemie AG München), 5 Teile einer pyrogenen Kieselsäure mit einer BET-Oberfläche von 300 m²/g (erhältlich unter dem Namen HDK® T30 bei der Wacker Chemie AG München), 5 Teile eines Kohlenwasserstoffgemisches (D1) mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt. Es wurde ein Entschäumer mit einer Viskosität von 6000 mPas erhalten.

### Entschäumercompound A3 (nicht erfindungsgemäß, keine Komponente (a1) mit direkt am Si-Atom gebundenen aromatischen Resten)

### Entschäumercompound A3 wurde wie folgt hergestellt:

75 Teile eines mit Trimethylsiloxygruppen terminierten Diorganopolysiloxans aus 52 mol% 2-Phenylpropenylmethysiloxan- und 48 mol% Dimethylsiloxaneinheiten, das eine Viskosität von 2160 mPas aufwies (Erhalten durch Umsetzung von 139g eines Siloxans (CH₃)₃-Si-O-[SiH(CH₃)-O]₄₀-[Si(CH₃)₂-O]₃₇-Si(CH₃)₃ mit 126g alpha-Methylstyrol (2-Phenylpropen) in Gegenwart eines Platinkatalysators), 5 Teile einer pyrogenen Kieselsäure mit einer BET-Oberfläche von 300 m²/g (erhältlich unter dem Namen HDK® T30 bei der Wacker Chemie AG München), 10 Teile eine Polydimethylsiloxans mit einer Viskosität von 10 mPas, 5 Teile eine Polydimethylsiloxans mit einer Viskosität von 100 mPas, 5 Teile eines bei Raumtemperatur festen Siliconharzes bestehend aus folgenden Einheiten (nach ²⁹Si-NMR und IR-Analyse): 40 mol-% CH₃SiO_{1/2}-, 50 mol-%- SiO_{4/2}-, 8 mol-% C₂H₅OSiO_{3/2}- und 2 mol-% HOSiO_{3/2}-, wobei dieses Harz eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt. Es wurde ein cremeartiger Entschäumer erhalten.

### Entschäumercompound A4 (nicht erfindungsgemäß, keine Komponente (a1) mit direkt am Si-Atom gebundenen aromatischen Resten)

### Entschäumercompound A4 wurde wie folgt hergestellt:

85 Teile eines mit trimethylsiloxygruppen terminierten verzweigten Diorganopolysiloxans aus 25 mol% Norbornylmethylsiloxan- und 75 mol% Octylmethylsiloxaneinheiten, das eine Viskosität von 3260 mPas aufweist (erhalten durch Umsetzung von 130 g eines Siloxans der Formel (CH₃)₃-Si-O-[Si(CH₃)H-O]-₅₄-Si(CH₃) mit 50g Norbornen, 270g 1-Octen und 11g eines mit Dimethylvinylsiloxygruppen terminierten Polydimethylsiloxans mit einer Viskosität von 20 mPas in Gegenwart eine Platinkatalysators), 5 Teile einer pyrogenen Kieselsäure mit einer BET-Oberfläche von 300 m²/g (erhältlich unter dem Namen HDK® T30 bei der Wacker Chemie AG München), 5 Teile eines Kohlenwasserstoffgemisches (D1) mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt. Es wurde ein Entschäumer mit einer Viskosität von 8710 mPas erhalten.

### Entschäumercompound A5 (nicht erfindungsgemäß, keine Komponente (B))

### Entschäumercompound A5 wurde wie folgt hergestellt:

88 Teile einesSiliconöls mit einer Viskosität von 1000 mm²/s, das laut ²⁹Si-NMR aus folgenden Bausteinen (in Mol-%) besteht:

| | |
|---|---|
| Me₃SiO_{(1/2)} | 2,9% |
| Me₂SiO_{(2/2)} | 34,7% |
| Me₂Si(OH)O_{(1/2)} | 0,4% |
| PhSi(Me)O_{(2/2)} | 61,0% |
| PhSiO_{(3/2)} | 1,0% |

(erhältlich unter dem Namen Siliconöl AP 1000 bei der Wacker Chemie AG München), 5 Teile einer pyrogenen Kieselsäure mit einer BET-Oberfläche von 300 m²/g (erhältlich unter dem Namen HDK® T30 bei der Wacker Chemie AG München), 5 Teile eines Kohlenwasserstoffgemisches (D1) mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt. Es wurde ein Entschäumer mit einer Viskosität von 3000 mPas erhalten.

### Entschäumercompound A6

### Entschäumercompound A6 wurde wie folgt hergestellt:

42,5 Teile eines Siliconöls AP 1000 vom Beispiel A5, 42,5 Teile eines flüssigen Siliconharzes mit einer Viskosität von 140 mPas, das laut ²⁹Si-NMR aus folgenden Bausteinen (in Mol-%) besteht:

| | |
|---|---|
| Me₂SiO_{(2/2)} | 33,0% |
| Me₂Si (OR) O_{(1/2)} | 4,5% |
| Ph(OR)SiO_{(2/2)} | 28,8% |
| Ph(OR) ₂SiO_{(1/2)} | 11,5% |
| PhSiO _{(3/2)} | 22,2% |
| wobei R eine Mischung aus Methyl- und Butylrest ist, | |

(erhältlich unter dem Namen SILRES® SY 231 bei der Wacker Chemie AG München), 5 Teile einer pyrogenen Kieselsäure mit einer BET-Oberfläche von 300 m²/g (erhältlich unter dem Namen HDK® T30 bei der Wacker Chemie AG München), 5 Teile eines bei Raumtemperatur festen Siliconharzes bestehend aus folgenden Einheiten (nach ²⁹Si-NMR und IR-Analyse): 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt. Es wurde ein Entschäumer mit einer Viskosität von 1980 mPas erhalten.

### Entschäumercompound A7

Entschäumercompound A7 wurde analog zu A6 hergestellt, mit der Abänderung, dass 60 Teile Siliconöl und 25 Teile Siliconharz eingesetzt wurden.
Es wurde ein Entschäumer mit einer Viskosität von 2320 mPas erhalten.

### Entschäumercompound A8

### Entschäumercompound A8 wurde wie folgt hergestellt:

45 Teile eines Trimethylsiloxygruppen terminierten Diorganopolysiloxans aus 52 mol% 2-Phenylpropenylmethysiloxan- und 48 mol% Dimethylsiloxaneinheiten vom Beispiel A3, 35 Teile Phenylsiliconöl AP 1000 vom Beispiel A5, 5 Teile eines Polydimethylsiloxans mit einer Viskosität von 100 mPas, 5 Teile eines bei Raumtemperatur festen Siliconharzes bestehend aus folgenden Einheiten (nach ²⁹Si-NMR und IR-Analyse): 40 mol-% CH₃SiO_{1/2}-, 50 mol-% SiO_{4/2}-, 8 mol-% C₂H₃OSiO_{3/2}- und 2 mol-% HOSiO_{3/2}-, wobei dieses Harz eine gewichtsmittlere Molmasse von 7900g/mol (bezogen auf Polystyrolstandard) hat, 5 Teile einer pyrogenen Kieselsäure mit einer BET-Oberfläche von 300 m²/g (erhältlich unter dem Namen HDK® T30 bei der Wacker Chemie AG München), und 0,7 Teile einer 20 Gew.-%igen methanolischen KOH wurden mit einem Dissolver vermischt und 4 Stunden auf 150°C erhitzt. Es wurde ein cremeartiger Entschäumer mit einer Viskosität von 57800 mPas erhalten.

Die für die Formulierungen verwendeten Polyether (B):
**B1:** Ein Polypropylenglycol mit einer Viskosität von ca. 300 mPas (erhältlich unter dem Namen Pluriol P 2000 bei der BASF SE in D-Ludwigshafen);
**B2:** Ein Polypropylenglycol-polyethylenglycol-copolymer mit 10% Polyethylenglycol und einer Viskosität von ca. 350 mPas (erhältlich unter dem Namen Pluronic PE 6100 bei der BASF SE in D-Ludwigshafen)

Das für die Formulierungen verwendete polyethermodifiziertes Siloxan (**C1**) ist ein verzweigtes Polyethersiloxan, das nach EP 1885770 B1, Absatz [0083-0084], Ausführungsbeispiel (B), Polymer 1, hergestellt wurde und eine Viskosität von 5490 mPas bei einem Schergefälle von 1/s hat.

### Beispiele für nicht erfindungsgemäße und erfindungsgemäße Entschäumerformulierungen

Die Herstellung der einzelnen Entschäumerformulierungen erfolgte durch einfaches Vermischen aller der in Tabelle 1 angegebenen Komponenten (Angaben in Gew.-%) mit einer Dissolverscheibe.

**Tabelle 1**

| Beispiele bzw. Vergleichsversuche | Komponente (A) | Komponente (B) | Komponente (C) | Aussehen / Viskosität |
|---|---|---|---|---|
| V1 (nicht erfindungsgemäß) Dimethylsiloxan | 40 A1 | 24 B1 | 2 C1 | Weiß homogen |
| | | 34 B2 | | |
| V2 (nicht erfindungsgemäß) Dodecylmethyl-alphamethylstyrylmethylsiloxan | 40 A2 | 24 B1 | 2 C1 | Inhomogen getrennt, keine weitere Prüfung möglich |
| | | 34 B2 | | |
| V3 (nicht erfindungsgemäß) Dimethyl-alphamethylstyrylmethylsiloxan | 40 A3 | 58 B1 | 2 C1 | Inhomogen getrennt, keine weitere Prüfung möglich |
| V4 (nicht erfindungsgemäß) Norbornyloctylmethylsiloxan | 40 A4 | 58 B1 | 2 C1 | Inhomogen getrennt, keine weitere Prüfung möglich |
| V5 (nicht erfindungsgemäß) ohne (B) | 100 A5 | - | - | homogen |
| 1 (erfindungsgemäß) Phenylsiloxan | 40 A5 | 24 B1 | 2 C1 | Grau homogen |
| | | 34 B2 | | 666 mPas |
| 2 (erfindungsgemäß) Phenylsiloxan | 50 A5 | 24 B1 | 2 C1 | Grau homogen |
| | | 24 B2 | | 830 mPas |
| 3 (erfindungsgemäß) Phenylsiloxan | 40 A6 | 24 B1 | 2 C1 | Grau homogen |
| | | 34 B2 | | 770 mPas |
| 4 (erfindungsgemäß) Phenylsiloxan | 40 A7 | 60 B1 | - | Weiß homogen 790 mPas |
| 5 (erfindungsgemäß) Phenylsiloxan | 40 A7 | 58 B1 | 2C1 | Grau homogen 730 mPas |
| 6 (erfindungsgemäß) Phenylsiloxan und Dimethylalpha-methylstyrylmethylsiloxan | 40 A8 | 58 B1 | 2C1 | Grau homogen 1730 mPas |

Die nicht-erfindungsgemäßen Entschäumerzusammensetzungen gemäß den Vergleichsversuchen V2 bis V4 enthalten ein Organopolysiloxan, bei dem die aromatischen Kohlenwasserstoffreste nicht über ein Ringkohlenstoffatom direkt an das Si-Atom gebunden sind, sondern über einen aliphatischen Kohlenwasserstoffrest. Tabelle 1 zeigt, dass die nicht-erfindungsgemäßen Entschäumerzusammensetzungen V2 bis V4 inhomogen sind und Phasentrennung aufweisen, sodass sie für die Verwendung als Entschäumer ungeeignet sind. Die erfindungsgemäßen Entschäumerzusammensetzungen gemäß den Beispielen 1 bis 6 sind dagegen homogene Zusammensetzungen, was eine Voraussetzung für deren Verwendung als Entschäumer in Flüssigwaschmitteln ist.

Die Entschäumerwirkung der so hergestellten Formulierungen wird im Flüssigwaschmittel, dessen Herstellung oben beschrieben ist, getestet und die Ergebnisse sind in der Tabelle 2 zusammengefasst.

**Tabelle 2: Prüfung der Entschäumerformulierungen im flüssigen Waschmittel**

| Beispiele bzw. Vergleichsversuche | Dosierung in Gew.-% | Schaumnote sofort in % | Schaumnote nach 8 Wochen Lagerung in % | Verträglichkeit |
|---|---|---|---|---|
| V1 (nicht erfindungsgemäß) Dimethylsiloxan | 0,25 | 10 | 64 | Abscheidungen, Schlieren |
| V5 (nicht erfindungsgemäß) ohne (B) | 0,05 | 0 | 46 | Abscheidungen, unverträglich |
| 1 (erfindungsgemäß) Phenylsiloxan | 0,0625 | 0 | 12 | verträglich |
| 2 (erfindungsgemäß) Phenylsiloxan | 0,05 | 5 | 7 | verträglich |
| 3 (erfindungsgemäß) Phenylsiloxan | 0,0625 | 20 | 18 | verträglich |
| 4 (erfindungsgemäß) Phenylsiloxan | 0,0625 | 22 | 6 | Verträglich |
| 5 (erfindungsgemäß) Phenylsiloxan | 0,0625 | 5 | 15 | Verträglich |
| 6 (erfindungsgemäß) Phenylsiloxan | 0,0625 | 12 | 19 | Verträglich |

Wie aus Tabelle 2 zu entnehmen ist, zeigen die erfindungsgemäßen Entschäumerformulierungen gemäß den Beispielen 1 bis 6 eine gute Verträglichkeit mit dem Flüssigwaschmittel, wohingegen die nicht-erfindungsgemäße Entschäumerformulierung V5, die keine Komponente (B), also kein Polypropylenglycol bzw. Polypropylenglycol-polyethylenglycol-Copolymer enthält, Abscheidungen aufweist und mit dem Flüssigwaschmittel unverträglich ist. Auch die Verwendung der nicht-erfindungsgemäßen Entschäumerformulierung V1 auf Basis von Dimethylpolysiloxan, die keine Komponente (a1), also kein Phenylsiloxan aufweist, führt zu Abscheidungen und Schlieren im Flüssigwaschmittel, was unerwünscht ist.

Weiterhin zeigt Tabelle 2, dass die erfindungsgemäßen Entschäumerformulierungen gemäß den Beispielen 1 bis 6 eine gute Entschäumerwirkung, insbesondere nach Lagerung der Entschäumerformulierung im Flüssigwaschmittel, aufweisen, im Gegensatz zu den nicht-erfindungsgemäßen Entschäumerformulierungen V1 und V5, die insbesondere nach Lagerung der Entschäumerformulierung im Flüssigwaschmittel, eine deutlich schlechtere Entschäumerwirkung aufweisen.

## Patentansprüche

1. Entschäumerzusammensetzungen enthaltend
(A) ein Entschäumercompound enthaltend
(a1) mindestens eine Organosiliziumverbindung, welche Einheiten der Formel
Rₐ(R¹O)_{b}R²_{c}SiO_{(4-a-b-c)/2} (I)
aufweist, worin
R gleich oder verschieden sein kann und ein Wasserstoffatom oder einen einwertigen, SiC-gebundenen, gegebenenfalls substituierten, aliphatischen oder über aliphatische Gruppen an das Siliziumatom gebundenen aromatischen Kohlenwasserstoffrest bedeutet,
R¹ gleich oder verschieden sein kann und ein Wasserstoffatom oder einen einwertigen, gegebenenfalls substituierten Kohlenwasserstoffrest bedeutet,
R² gleich oder verschieden sein kann und einen einwertigen, gegebenenfalls substituierten, aromatischen Kohlenwasserstoffrest, der über ein Ringkohlenstoffatom an das Siliziumatom angebunden ist, bedeutet,
a 0, 1, 2 oder 3 ist,
b 0, 1, 2 oder 3 ist und
c 0, 1, 2 oder 3 ist,
mit der Maßgabe, dass die Summe a+b+c kleiner oder gleich 3 ist und in 1-100 % aller Einheiten der Formel (I) c verschieden 0 ist und in mindestens 50 % aller Einheiten der Formel (I) in der Organosiliziumverbindung die Summe a+b+c gleich 2 ist,
(a2) mindestens einen Zusatzstoff ausgewählt aus
(a21) Füllstoffpartikeln und/oder
(a22) Organopolysiloxanharz bestehend aus Einheiten der Formel
R³_{d}(R⁴O)ₑSiO_{(4-d-e)/2} (II),
worin
R³ gleich oder verschieden sein kann und ein Wasserstoffatom oder einen einwertigen, gegebenenfalls substituierten, SiC-gebundenen Kohlenwasserstoffrest bedeutet,
R⁴ gleich oder verschieden sein kann und ein Wasserstoffatom oder einen einwertigen, gegebenenfalls substituierten Kohlenwasserstoffrest bedeutet,
d 0, 1, 2 oder 3 ist und
e 0, 1, 2 oder 3 ist,
mit der Maßgabe, dass die Summe d+e kleiner oder gleich 3 ist und in weniger als 50 % aller Einheiten der Formel (II) im Organopolysiloxanharz die Summe d+e gleich 2 ist,
und gegebenenfalls
(a3) eine Organosiliziumverbindung, welche Einheiten der Formel
R⁵_{g}(R⁶O)ₕSiO_{(4-g-h)/2} (III)
aufweist, worin
R⁵ gleich oder verschieden sein kann und eine für R angegebene Bedeutung hat,
R⁶ gleich oder verschieden sein kann und eine für R¹ angegebene Bedeutung hat,
g 0, 1, 2 oder 3 ist und
h 0, 1, 2 oder 3 ist,
mit der Maßgabe, dass die Summe g+h kleiner oder gleich 3 ist und in mindestens 50 % aller Einheiten der Formel (III) in der Organosiliziumverbindung die Summe g+h gleich 2 ist,
(B) Polyoxyalkylene ausgewählt aus der Gruppe der Polypropylenglycole, endständig veretherte oder veresterte Polypropylenglycole, Polypropylenglycol/Polyethylenglycol-Copolymere, endständig veretherte oder veresterte Polypropylenglycol/Polyethylenglycol-Copolymere, und deren Mischungen,
gegebenenfalls
(C) polyethermodifizierte Siloxane,
gegebenenfalls
(D) organische Verbindungen,
und gegebenenfalls
(F) weitere Additive.

2. Entschäumerzusammensetzungen nach Anspruch 1, **dadurch gekennzeichnet, dass** R ein einwertiger aliphatischer Kohlenwasserstoffrest mit 1 bis 4 Kohlenstoffatomen, bevorzugt ein Methylrest, ist und R² ein Arylrest, bevorzugt ein Phenylrest, ist.

3. Entschäumerzusammensetzungen nach Anspruch 1 oder 2, **dadurch gekennzeichnet, dass** 10 bis 100 Mol-% der SiC-gebundenen Reste in der Komponente (a1) Reste R² sind.

4. Entschäumerzusammensetzungen nach Anspruch 1, 2 oder 3, **dadurch gekennzeichnet, dass** Wasser in Mengen von höchstens 5 Gew.-%, bevorzugt höchstens 1 Gew.-%, jeweils bezogen auf das Gesamtgewicht der Entschäumerzusammensetzung, mitverwendet wird.

5. Entschäumerzusammensetzungen nach einem der Ansprüche 1 bis 4, **dadurch gekennzeichnet, dass** die Mitverwendung von Wasser ausgeschlossen ist.

6. Entschäumerzusammensetzungen nach einem der Ansprüche 1 bis 5, **dadurch gekennzeichnet, dass** als Komponente (a22) Organopolysiloxanharze, die im Wesentlichen aus R³₃SiO_{1/2} (M) - und SiO_{4/2} (Q) -Einheiten bestehen, wobei R³ die im Anspruch 1 dafür angegebene Bedeutung hat, das molare Verhältnis von M- zu Q-Einheiten im Bereich von 0,5 bis 2,0 liegt und bis zu 10 Gew.-% Si-gebundene Hydroxy- oder Alkoxygruppen enthalten sein können, eingesetzt werden.

7. Entschäumerzusammensetzungen nach einem der Ansprüche 1 bis 6, **dadurch gekennzeichnet, dass** als Komponente (a21) Kieselsäuren mit einer BET-Oberfläche von 50 bis 800 m²/g eingesetzt werden.

8. Entschäumerzusammensetzungen nach einem der Ansprüche 1 bis 7, **dadurch gekennzeichnet, dass** als Komponente (B) Polyoxyalkylene der Formel
R⁷-[O-CH₂-CH(CH₃)]ₓ-[O-CH₂-CH₂]_{y}-O-R⁷ (IV),
worin R⁷ gleich oder verschieden sein kann und ein Wasserstoffatom, einen C₁-C₃₀-Alkylrest, einen C₁-C₃₀-Alkenylrest oder einen Rest der Formel
R⁸-C(O)- (V)
bedeutet,
R⁸ einen C₁-C₂₂-Alkylrest bedeutet,
x einen Wert von 6 bis 300 und
y einen Wert von 0 bis 30 hat
und das Verhältnis y/x 0 bis 1 ist,
eingesetzt werden.

9. Entschäumerzusammensetzungen nach einem der Ansprüche 1 bis 8, **dadurch gekennzeichnet, dass** es Entschäumerzusammensetzungen bestehend aus
(A) 10 bis 90 Gew.-% Entschäumercompound gemäß einem der Ansprüche 1 bis 7,
(B) 10 bis 90 Gew.-% Polyoxyalkylene gemäß Anspruch 1 oder 8
(C) 0 bis 10 Gew.-% polyethermodifizierte Siloxane
(D) 0 bis 20 Gew.-% organische Verbindungen
(E) 0 bis 1 Gew.-% Wasser, und
(F) 0 bis 10 Gew.-% weitere Additive,
jeweils bezogen auf das Gesamtgewicht der Entschäumerzusammensetzungen, sind.

10. Tensidformulierungen, vorzugsweise Netzmittel, Waschmittel oder Reinigungsmittel, enthaltend Entschäumerzusammensetzungen gemäß einem der Ansprüche 1 bis 9.

11. Verfahren zum Entschäumen und/oder zur Schaumverhinderung von Medien, **dadurch gekennzeichnet, dass** die Entschäumerzusammensetzung gemäß den Ansprüchen 1 bis 9 mit dem Medium vermischt wird.

12. Verfahren nach Anspruch 11, **dadurch gekennzeichnet, dass** die Entschäumerzusammensetzung in Mengen von 0,1 Gew.-ppm bis 1 Gew.-% zum schäumenden Medium zugegeben wird.

## Claims

1. Defoamer compositions comprising
(A) a defoamer compound comprising (a1)
at least one organosilicon compound having units of the formula
Rₐ(R¹O)_{b}R²_{c}SiO_{(4-a-b-c)/2} (I)
in which
R may be the same or different and is a hydrogen atom or a monovalent, SiC-bonded, optionally substituted, aliphatic hydrocarbyl radical or aromatic hydrocarbyl radical bonded to the silicon atom via aliphatic groups,
R¹ may be the same or different and is a hydrogen atom or a monovalent, optionally substituted hydrocarbyl radical,
R² may be the same or different and is a monovalent, optionally substituted, aromatic hydrocarbyl radical bonded to the silicon atom via a ring carbon atom,
a is 0, 1, 2 or 3,
b is 0, 1, 2 or 3 and
c is 0, 1, 2 or 3,
with the proviso that the sum total of a+b+c is not more than 3 and, in 1-100% of all units of the formula (I), c is different than 0 and, in at least 50% of all units of the formula (I), the sum total of a+b+c in the organosilicon compound is 2,
(a2) at least one additive selected from
(a21) filler particles and/or
(a22) organopolysiloxane resin consisting of units of the formula
R³_{d}(R⁴O)ₑSiO_{(4-d-e)/2} (II)
in which
R³ may be the same or different and is a hydrogen atom or a monovalent, optionally substituted, SiC-bonded hydrocarbyl radical,
R⁴ may be the same or different and is a hydrogen atom or a monovalent, optionally substituted hydrocarbyl radical,
d is 0, 1, 2 or 3 and
e is 0, 1, 2 or 3,
with the proviso that the sum total of d+e is not more than 3 and, in less than 50% of all units of the formula (II), the sum total of d+e in the organopolysiloxane resin is 2,
and optionally
(a3) has an organosilicon compound having units of the formula
R⁵_{g}(R⁶O)ₕSiO_{(4-g-h)/2} (III)
in which
R⁵ may be the same or different and has a definition specified for R,
R⁶ may be the same or different and has a definition specified for R¹,
g is 0, 1, 2 or 3 and
h is 0, 1, 2 or 3,
with the proviso that the sum total of g+h is not more than 3 and, in at least 50% of all units of the formula (III), the sum total of g+h in the organosilicon compound is 2,
(B) polyoxyalkylenes selected from the group of the polypropylene glycols, terminally etherified or esterified polypropylene glycols, polypropylene glycol/polyethylene glycol copolymers, terminally etherified or esterified polypropylene glycol/polyethylene glycol copolymers, and mixtures thereof,
optionally
(C) polyether-modified siloxanes,
optionally
(D) organic compounds,
and optionally
(F) further additives.

2. Defoamer compositions according to Claim 1, **characterized in that** R is a monovalent aliphatic hydrocarbyl radical having 1 to 4 carbon atoms, preferably a methyl radical, and R² is an aryl radical, preferably a phenyl radical.

3. Defoamer compositions according to Claim 1 or 2, **characterized in that** 10 to 100 mol% of the SiC-bonded radicals in component (a1) are R² radicals.

4. Defoamer compositions according to Claim 1, 2 or 3, **characterized in that** water is additionally used in amounts of not more than 5% by weight, preferably not more than 1% by weight, based in each case on the total weight of the defoamer composition.

5. Defoamer compositions according to any of Claims 1 to 4, **characterized in that** the additional use of water is ruled out.

6. Defoamer compositions according to any of Claims 1 to 5, **characterized in that** component (a22) comprises organopolysiloxane resins consisting essentially of R³₃SiO_{1/2} (M) and SiO_{4/2} (Q) units, where R³ is as defined in Claim 1, the molar ratio of M to Q units is in the range from 0.5 to 2.0 and up to 10% by weight of Si-bonded hydroxy or alkoxy groups may be present.

7. Defoamer compositions according to any of Claims 1 to 6, **characterized in that** component (a21) comprises silicas having a BET surface area of 50 to 800 m²/g.

8. Defoamer compositions according to any of Claims 1 to 7, **characterized in that** component (B) comprises polyoxyalkylenes of the formula
R⁷-[O-CH₂-CH(CH₃)]ₓ-[O-CH₂-CH₂]_{y}-O-R⁷ (IV)
in which R⁷ may be the same or different and is a hydrogen atom, a C₁-C₃₀-alkyl radical, a C₁-C₃₀-alkenyl radical or a radical of the formula
R⁸-C(O)- (V),
R⁸ is a C₁-C₂₂-alkyl radical,
x has a value of 6 to 300 and
y has a value of 0 to 30
and the ratio y/x is 0 to 1.

9. Defoamer compositions according to any of Claims 1 to 8, **characterized in that** they are defoamer compositions consisting of
(A) 10% to 90% by weight of defoamer compound according to any of Claims 1 to 7,
(B) 10% to 90% by weight of polyoxyalkylenes according to Claim 1 or 8
(C) 0% to 10% by weight of polyether-modified siloxanes
(D) 0% to 20% by weight of organic compounds
(E) 0% to 1% by weight of water, and
(F) 0% to 10% by weight of further additives,
based in each case on the total weight of the defoamer compositions.

10. Surfactant formulations, preferably wetting agent, washing composition or cleaning composition, comprising defoamer compositions according to any of Claims 1 to 9.

11. Method of defoaming and/or preventing foaming of media, **characterized in that** the defoamer composition according to Claims 1 to 9 is mixed with the medium.

12. Method according to Claim 11, **characterized in that** the defoamer composition is added to the foaming medium in amounts of 0.1 ppm by weight to 1% by weight.

## Revendications

1. Compositions anti-mousse contenant
(A) un composé anti-mousse contenant (a1
) au moins un composé d'organosilicium, qui présente des motifs de formule
Rₐ(R¹O)_{b}R²_{c}SiO_{(4-a-*b*-*c*)/2} (I)
dans laquelle
R peut être identique ou différent et signifie un atome d'hydrogène ou un radical hydrocarboné monovalent, lié à SiC, éventuellement substitué, aliphatique ou aromatique lié à l'atome de silicium par l'intermédiaire de groupes aliphatiques,
R¹ peut être identique ou différent et signifie un atome d'hydrogène ou un radical hydrocarboné monovalent, éventuellement substitué,
R² peut être identique ou différent et signifie un radical hydrocarboné aromatique monovalent, éventuellement substitué, qui est relié à l'atome de silicium par l'intermédiaire d'un atome de carbone de cycle,
a est 0, 1, 2 ou 3,
b est 0, 1, 2 ou 3, et
c est 0, 1, 2 ou 3,
étant entendu que la somme a + b + c est inférieure ou égale à 3 et dans 1 à 100 % de tous les motifs de formule (I) c est différent de 0 et dans au moins 50 % de tous les motifs de formule (I) dans le composé d'organo silicium, la somme a + b + c est égale à 2,
(a2) au moins un additif choisi parmi
(a21) des particules de charge et/ou
(a22) une résine d'organopolysiloxane constituée de motifs de formule
R³_{d}(R⁴O)ₑSiO_{(4-d-e)/2} (II),
dans laquelle
R³ peut être identique ou différent et signifie un atome d'hydrogène ou un radical hydrocarboné monovalent, lié à SiC, éventuellement substitué,
R⁴ peut être identique ou différent et signifie un atome d'hydrogène ou un radical hydrocarboné monovalent éventuellement substitué,
d est 0, 1, 2 ou 3, et
e est 0, 1, 2 ou 3,
étant entendu que la somme d + e est inférieure ou égale à 3 et dans moins de 50 % de tous les motifs de formule (II) dans la résine d'organopolysiloxane la somme d + e est égale à 2,
et éventuellement
(a3) un composé d'organo silicium, qui présente des motifs de formule
R⁵₅(R⁶O)ₕSiO_{(4-g-h)/2} (III),
dans laquelle
R⁵ peut être identique ou différent et possède une signification indiquée pour R
R⁶ peut être identique ou différent et possède une signification indiquée pour R¹
g est 0, 1, 2 ou 3, et
h est 0, 1, 2 ou 3,
étant entendu que la somme g + h est inférieure ou égale à 3 et dans au moins 50 % de tous les motifs de formule (III) dans le composé d'organosilicium la somme g + h est égale à 2,
(B) des polyoxyalkylènes choisis dans le groupe des polypropylèneglycols, des polypropylèneglycols éthérifiés ou estérifiés en terminaison de chaîne, des copolymères polypropylèneglycol/polyéthylèneglycol, des copolymères polypropylèneglycol/polyéthylèneglycol éthérifiés ou estérifiés en terminaison de chaîne, et leurs mélanges
éventuellement
(C) des siloxanes modifiés par polyéther, éventuellement
(D) des composés organiques,
éventuellement
(F) d'autres additifs.

2. Compositions anti-mousse selon la revendication 1, **caractérisées en ce que** R est un radical hydrocarboné aliphatique monovalent comportant 1 à 4 atomes de carbone, préférablement un radical méthyle, et R² est un radical aryle, préférablement un radical phényle.

3. Compositions anti-mousse selon la revendication 1 ou 2, **caractérisées en ce que** 10 à 100 % en moles des radicaux liés à SiC dans le composant (a1) sont des radicaux R².

4. Compositions anti-mousse selon la revendication 1, 2 ou 3, **caractérisées en ce que** de l'eau en des quantités d'au plus 5 % en poids, préférablement d'au plus 1 % en poids, à chaque fois par rapport au poids total de la composition anti-mousse, est utilisée conjointement.

5. Compositions anti-mousse selon l'une quelconque des revendications 1 à 4, **caractérisées en ce que** l'utilisation conjointe d'eau est exclue.

6. Compositions anti-mousse selon l'une quelconque des revendications 1 à 5, **caractérisées en ce que** des résines d'organopolysiloxane sont utilisées en tant que composant (a22), qui sont constituées essentiellement de motifs R³₃SiO_{1/2} (M) et SiO_{4/2} (Q), R³ possédant la signification indiquée dans la revendication 1, le rapport molaire d'unités M à Q se situant dans la plage de 0,5 à 2,0 et jusqu'à 10 % en poids de groupes hydroxy ou alcoxy liés à Si pouvant être contenus.

7. Compositions anti-mousse selon l'une quelconque des revendications 1 à 6, **caractérisées en ce que** des silices dotées d'une surface BET de 50 à 800 m²/g sont utilisées en tant que composant (a21).

8. Compositions anti-mousse selon l'une quelconque des revendications 1 à 7, **caractérisées en ce que** des polyoxyalkylènes de formule
R⁷-[O-CH₂-CH(CH₃)]ₓ-[O-CH₂-CH₂]_{y}-O-R⁷ (IV),
sont utilisés en tant que composant (B),
dans laquelle R⁷ peut être identique ou différent et signifie un atome d'hydrogène, un radical C₁₋₃₀-alkyle, un radical C₁₋₃₀-alcényle ou un radical de formule
R⁸-C(O)- (V),
R⁸ signifie un radical C₁₋₂₂-alkyle,
x vaut de 6 à 300 et
y vaut 0 à 30
et le rapport y/x est de 0 à 1.

9. Compositions anti-mousse selon l'une quelconque des revendications 1 à 8, **caractérisées en ce que** ce sont des compositions anti-mousse constituées de
(A) 10 à 90 % en poids d'un composé anti-mousse selon l'une quelconque des revendications 1 à 7,
(B) 10 à 90 % en poids de polyoxyalkylènes selon la revendication 1 ou 8
(C) 0 à 10 % en poids de siloxanes modifiés par polyéther
(D) 0 à 20 % en poids de composés organiques
(E) 0 à 1 % en poids d'eau, et
(F) 0 à 10 % en poids d'autres additifs,
à chaque fois par rapport au poids total des compositions anti-mousse.

10. Formulations de tensioactif, de préférence agents mouillants, détergents ou produits de nettoyage, contenant des compositions anti-mousse selon l'une quelconque des revendications 1 à 9.

11. Procédé pour le démoussage et/ou l'empêchement de mousse de milieux, **caractérisé en ce que** la composition anti-mousse selon les revendications 1 à 9 est mélangée avec le milieu.

12. Procédé selon la revendication 11, **caractérisé en ce que** la composition anti-mousse est ajoutée au milieu moussant en des quantités de 0,1 ppm en poids à 1 % en poids.
